(19) Europäisches Patentamt
European Patent Office
Office européen des brevets

(11) **EP 3 819 667 A1**

(12) **EUROPEAN PATENT APPLICATION**

(43) Date of publication:
**12.05.2021 Bulletin 2021/19**

(21) Application number: **19306454.0**

(22) Date of filing: **08.11.2019**

(51) Int Cl.:
**G01S 13/86** *(2006.01)*  **G01S 13/931** *(2020.01)*
**G01S 17/89** *(2020.01)*  **G01S 17/931** *(2020.01)*
**G01S 13/89** *(2006.01)*

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Outsight**
**75005 Paris (FR)**

(72) Inventor: **BRAVO ORELLANA, Raul**
**75005 Paris (FR)**

(74) Representative: **Plasseraud IP**
**66, rue de la Chaussée d'Antin**
**75440 Paris Cedex 09 (FR)**

(54) **RADAR AND LIDAR COMBINED MAPPING SYSTEM**

(57)     A system comprising a radar (51) configured to generate at least a first frame comprising a first point cloud and first relative speeds, an imager (52) such as a Lidar configured to generate at least a second frame formed as an image and comprising a second point cloud and second relative speeds, at least a clock configured to generate first and second timestamps associated to the first frame and second frame respectively, a memory configured to store a map (1), a computing unit (6) configured to update the map with a registration of the first point cloud data of the first frame using the first timestamp and the first relative speeds, and further configured to update the map with a registration of the second point cloud data of the second frame using the second timestamp and the relative speeds associated with the second frame. Map building method carried out in such a system.

FIG. 6

## Description

### FIELD OF THE DISCLOSURE

Systems and methods for dynamically generating and updating a tridimensional map of an environment surrounding an entity, like a vehicle or another mobile entity, are described herein, along with systems and methods for simultaneous localization and mapping ('SLAM' in short).

The disclosure concerns notably the systems and processes to generate and update a rolling tridimensional map for moving vehicles specially autonomous-driving, self-driving or semi-autonomous vehicles. This disclosure also relates to an automotive vehicle equipped with such a system.

It is however also possible to use the promoted solution in the frame of monitoring systems for surveillance of protected volumes by fixed scanners.

### BACKGROUND OF THE DISCLOSURE

The present application belong the field of the generation of tridimensional environment maps that are representative of the surroundings of one or several moving objects and vehicles. These maps are dynamically generated and updated using tridimensional sensors/scanners mounted on said vehicles. These maps can be called 'floating' maps or otherwise 'rolling' maps, since they are built incrementally along the vehicle travel (i.e. the map has a moving footprint).

A tridimensional scanner (or imager) acquires sets of data points, called point clouds, that are representative of the objects located in a local volume of the environment surrounding said scanner/imager, also called a 'scene'. One example of a commonly used tridimensional scanner is a laser rangefinder such as a light detection and ranging (LIDAR) module which periodically scans its environment using a rotating laser beam. Some special Lidars are able to acquire their environment from a common simultaneous illumination, they are known as flash lidars. Also one can use one or more video camera(s), either with a plurality of 2D camera and/or one or more TOF 3D camera.

The acquired point clouds can be used to generate 3D maps of the environment seen by the vehicles during a travel for mapping purposes. The 3D maps may also be used to assist or to automate the driving of the vehicles, in particular for so-called autonomous vehicles.

However, combining point clouds generated by separated tridimensional scanners/imagers is a non-trivial procedure as the raw data generated by each tridimensional scanner/imager is sparse, noisy and discretized.

Therefore, the inventors have endeavored to propose an improved solution to reliably build a rolling (moving footprint) tridimensional map of an environment surrounding a vehicle and to reliably detect and identify objects, fixed or moving located in the environment surrounding a vehicle.

Besides, in the present document, we may use indifferently the terms "speed" and "velocity" to designate the same item.

### SUMMARY OF THE DISCLOSURE

According to one aspect of the present disclosure, it is disclosed a system comprising

- a radar (51) configured to generate at least a first frame comprising a first point cloud and first relative speeds,
- an imager (52) configured to generate at least a second frame formed as an image and comprising a second point cloud and second relative speeds,
- at least a clock configured to generate first and second timestamps associated to the first and second frame respectively,
- a memory configured to store a map (1),
- a computing unit (6) configured to update the map with a registration of the first point cloud data of the first frame using the first timestamp and the first relative speeds, and further configured to update the map with a registration of the second point cloud data of the second frame using the second timestamp and the second relative speeds.

The term "*map*" should be understood as a "rolling map of the scene" means here map which is built incrementally along the travel of the radar and imager units when they move together with a vehicle. In this sense, "rolling map" may otherwise be called 'floating map' or 'incremental map', the overall footprint of the map moves along generally with the vehicle. Whenever the radar and imager units are in a stationary configuration, we may still use in the present disclosure the term of rolling map.

We note that the "*scene*" of interest can be also moving along with the vehicle of interest. Areas of interest are situated ahead and aside the vehicle of interest, without excluding backside.

The term "*imager*" refers to a Lidar system or to a 3D camera/video system.

Thanks to the above arrangement, the buildup process of the map of the scene benefits from strengths of respective radar and lidar/video units, namely respectively **velocity/speed** accuracy on radar side and **position** accuracy on lidar/video imager side. Said otherwise, on one side precision and resolution of lidar/video is advantageously combined, on the other side, with low-level velocity accurate detection of radar; and this combination turns out to substantially enhance the overall accuracy and reliability of the map of the scene.

Also adverse climatic conditions do not affect the same way the radar and imager units. For example, presence of fog degrades Lidar but not much radar, whereas electromagnetic interference may affect radar operation but not lidar/3D video. This redundancy improves overall service and dependability.

Also the radar units and lidar units do not react the same regarding some particular materials like transparent materials, stealth materials; combining the two approaches enhances the overall result.

Moving objects can be tracked more easily since entities present within the scene are tracked by their position and their speed. It is to be noted that the proposed method and system can also be beneficial even though there is no moving object in the scene but the vehicle and its radar and imager units are moving.

The term "*registration process*" shall be construed as the process to cause the point cloud frame of interest (the latest received) to find the best possible match into the rolling 3D map of the scene, which implies mathematical transformation(s) to shift, orientate, spread-in spread-out the array of points of the point cloud frame of interest.

It should be noted that the point cloud frames from the radar unit are registered independently from the registration of the point cloud frames from the imager unit, and vice versa.

By '*asynchronously*', it is meant that since the radar and imager units operate independently, the first and second point cloud frames (11,12) are received asynchronously, i.e. without any common timing, or stated otherwise each frame of each scanner can arrive at different moments.

Regarding the term "***relative speed***", this "relative speed" includes a radial relative speed relative to the radar unit (respectively imager unit). Notably, the radar unit can directly measure the radial relative speed. We note that the radar unit exhibits a good accuracy regarding speed determination, notably radial relative velocity. Here the term "radial", qualifying the relative speed, means a speed vector projected on a radius line extending between the sensing device and the target point.

But the "*relative speed*" can also include more information, namely tangential speed in one or two direction (e.g. horizontal and vertical).

In practice, there may be a small or large overlap between a newly received frame and the rolling 3D map, and this is enough to allow reliable registration and then incrementing the content of the rolling 3D map.

It should be noted that the first radar-type scanner unit can be a 3D scanner or can be otherwise a 2D scanner (for example azimuthal horizontal scanning with large vertical aperture), the latter can be a cost-effective solution to provide velocity data about the most interesting points in the rolling 3D map.

The term "*radar-type scanner*" shall be construed as a scanner using bursts of electromagnetic waves and echoes on objects therefrom, said electromagnetic waves having a carrier frequency comprised between 10 MHz and 100 GHz.

The term "*lidar-type scanner*" shall be construed as a scanner using bursts of electromagnetic waves and echoes backscattering on objects therefrom, said electromagnetic waves being generally in the near infra-red domain, for example having a wavelength comprised between 600 nanometer and 2000 nanometer, more preferably in the range 1400-1600nm, and in a particular embodiment about 1550 nanometer.

Unlike some known systems, speed data (e.g. at least relative radial speed) is used to **register** a newly received frame into the current rolling map of the scene. The matching process can primarily use the speed data to search for substantial coincidence regarding the speed of points (newly received frame versus rolling 3D map). In other words, fusion for registration is made through velocity vector (proximity rule like least squares approach or similar, or likewise any ICP algorithm).

Practically, speed data can provide advantageously supplemental information with regard to position data. Moving objects can be more reliably detected and tracked since their velocity is different from the other items in the background. Preferably speed-based registration can be performed together with position-based registration; though it is not excluded to perform speed-based registration alone.

In various embodiments, one may possibly have recourse in addition to one and/or other of the following arrangements, taken alone or in combination.

According to one aspect, the imager comprises a lidar-type sensing unit. This is a solution which can work with dark conditions and/or at night, with medium or high spatial resolution. Further, lidar devices are less sensitive to EMC jamming.

According to one aspect, the imager comprises a stereo-imaging device, such as a 3D video system. We may benefit from a common existing video equipment like the one provided for example for scanning the speed limits road signs.

According to one aspect, the imager comprises a lidar with a laser emitting light in the range of 700nm to 2000nm, more preferably in the range 1400-1600, and in a particular embodiment about 1550 nanometer. Thereby the system is optimized regarding human eye safety; further, this bandwidth implies low interference with sun spectrum.

According to one aspect, the imager is configured to measure directly relative speeds associated with the point cloud of the second frame. Registration process can be done with the help of the native speed/velocity as per the radar frame registration. One can use for example a special lidar known as a FMCW Lidar as it will be set forth later.

According to one aspect, the speed of each second point is determined indirectly by comparing at least two successive second point cloud frames, either lidar or 3D video. Namely, the imager is configured to measure indirectly relative speeds associated with a subset of the second frame (12), wherein the subset of points is associated with another second frame captured by the imager at a different time. Thereby we may use a lidar scanner which is found readily available and cost-effective on the market, and a low level software loop can compute easily the speed of each second point. Same applies for 3D video since often there is already provided some video equipment for example for scanning the speed limits road signs.

According to one aspect, the radar and imager (51,52) exhibit different frame rates. Each scanner unit can therefore work optimally, at its more efficient rate, independently from the other one.

According to one aspect, the radar and imager units are spaced from one another. Thanks to the independent and asynchronous registration process promoted therein, there is no need to locate the two scanners at the same position on the vehicle. One can imagine having a first scanner and second scanner substantially far away from one another, let's say more than 1 m. Also this allows great flexibility for integration of scanner in the vehicle architecture.

According to one aspect, the radar and imager units have known and fixed relative positions. This can reduce the time needed to find a match in the registration process from a newly received frame down to the rolling 3D map.

According to one aspect, the radar and imager units have unknown relative positions, and a calibration process can be performed. Calibration can be obtained after registration of the frame of one device in comparison with the registration of the frame of the other device.

According to one aspect, the system is deprived of common clock, i.e. at least radar and imager units (51,52) have no common clock. In the promoted system here, there is no need to synchronize various components or subsystems, unlike of the solutions known in the prior art.

According to one aspect, the radar and imager units are mounted on a mobile entity and move along a trajectory. The mobile entity can be typically a vehicle. The promoted solution turns out to be particularly efficient regarding the problem to construct/build quickly and reliably a rolling map in a changing environment. The mobile entity can also be a robot, a drone, an UAV, or the like.

According to another aspect, the radar and imager units are fixedly mounted (i.e. stationary) and the system is configured to detect an intrusion of an object into a protected space/volume. For monitoring protected volumes, the use of velocity is of particular interest to avoid any false positive detection of intrusion. From another standpoint, a true positive alarm can be issued even with a very small object intrudes in the protected volume. Reaction time can also be decreased, using directly speed detection.

According to one aspect, the rolling map of the scene is built in a cumulative and incremental manner. The rolling map starts void and then first point cloud frame is added, and then all the following frames are added incrementally after registration (i.e. matching geometrical transformation function). It may be provided that the most recent points additions are given more weight than the more ancient. Also, in the incremental rolling map, for the same space direction of closer object supersedes a farther objet whenever the closer object interposes between the scanner units and the farther object.

According to one aspect, since the computing unit (6) comprises a clock and first and second frames are timestamped, the rolling map can comprise as an attribute for each point the last updated timestamp, which is indicative of the recentness of the information.

According to one aspect, the registration process includes a calculation of a position of a reference point (51a,52a) of the radar or the imager within the map of the scene, this reference point can also be called the 'pose'. Thereby, the timestamp trajectory of the reference point (pose) of each of first and second scanner units can be reconstructed, slightly a posteriori. Also a trajectory of a further reference point, attached to the vehicle on which are mounted the radar and imager can also be constructed.

According to one aspect, the system may comprise further radar/imager units (53,54), either radar scanners and/or lidar/3D video devices. The acquisition and registration of frames from further units can also be taken into account with the process exposed above.

According to one aspect, the computing unit (6) is configured to change relative speeds into absolute speeds by subtracting the current speed of the mobile entity on which the scanner units are mounted. Thereby, whenever the radar and imager units are placed on a mobile platform (mobile robot, vehicle, drone,...) the current speed of the platform is subtracted from the relative speed acquired in the point cloud frames, such that the rolling 3D map exhibits as attribute an absolute speed, and not a relative speed, for the points having a speed attribute. Null absolute speeds denote fixed objects like posts, trees, street furniture. Entities having absolute speed different from null speed can be observed with a particular interest.

According to one aspect, the computing unit (6) is coupled to the radar and imager units, through a wired link or wireless link.

According to one aspect, the radar acquires/collects first point cloud frames (11) of the scene with a first filed-of-view, the imager acquires/collects second point cloud frames (12) of the scene with a second filed-of-view. First and second filed-of-views may have different sizes, though it does not preclude effective operation of the registration process exposed above.

Further, the present disclosure is also directed to any vehicle, robot, drone or the like comprising a sensory system as described above.

According to another aspect, the present disclosure is also directed at a method carried out in a system comprising:

- a radar (51) configured to generate at least a first frame comprising a first point cloud and first relative speeds,
- an imager (52) configured to generate at least a second frame formed as an image and comprising a second point cloud and second relative speeds,
- a computing unit (6), and a memory configured to store a map (1),

the method comprising :

- acquire/collect, at the radar, first point cloud frames (11) of a scene, each first point cloud frame comprising an array of first points, each point having as attribute a position and relative speed with regard to the radar,
- at the radar unit, transmit each first point cloud frame to the computing unit as soon as they are available,
- acquire/collect, at the imager (52), second point cloud frames (12) of the scene, each second point cloud frame comprising an array of second points, each point having as attribute at least a 3D position and possibly a relative speed with regard to the second scanner unit,
- at the imager, transmit each second point cloud frame to the computing unit as soon as they are available,
- at the computing unit, from each of first and second point cloud frames (11,12), perform a registration step where a geometrical transformation function (TR) causes a point cloud frame of interest to match into the rolling map of the scene, wherein speed data is used to register a newly received frame into the current rolling map of the scene,
- at the computing unit, update already existing points and/or create new points in the rolling map of the scene (1), where said rolling map of the scene includes not only a position but also a speed of at least a plurality of points,
- update continuously and incrementally, at the a computing unit, the rolling map of the scene (1) from the successive registration of data from the first and second point cloud frames (11,12).

According to one aspect, the reception and registration of data from the first and second point cloud frames (11,12) are performed asynchronously, with frame rate and frame resolution being different for first and second point cloud frames.

According to one aspect, the computing unit (6) is configured to change relative speeds into absolute speeds by subtracting the current speed of the mobile entity on which the radar and imager units are mounted.

According to one aspect, the radar and imager units (51,52) exhibit different frame rates, and the system is deprived of common clock, i.e. at least first and second scanner units (51,52) have no common clock.

BRIEF DESCRIPTION OF THE DRAWINGS

Other features and advantages of the invention appear from the following detailed description of two of its embodiments, given by way of non-limiting example, and with reference to the accompanying drawings, in which:

- Figure 1 illustrates a diagrammatical top view of one or more vehicle(s) circulating on a road,
- Figure 2 illustrates a diagrammatical elevation view of the vehicle of interest circulating on a road,
- Figure 3 shows a diagrammatical block diagram of the system promoted in the present disclosure,
- Figure 4 is a chart illustrating the frame collection basic process by a radar scanner unit,
- Figure 5 is a chart illustrating the frame collection basic process by a lidar scanner unit,
- Figure 6 is a time chart illustrating reception of point cloud frames and extraction of data to update the rolling map
- Figure 7 is logic chart illustrating acquisition of point cloud frames and extraction of data to update/increment the rolling 3D map,
- Figure 8 illustrates a data array representing a point cloud frame,
- Figure 9 illustrates an evolution over time of the data rolling 3D map the collected radar and lidar frames,
- Figure 10 illustrates a matrix calculation taking a point cloud frame and updating therefrom the rolling 3D map,
- Figures 11A and 11B illustrate respectively first and second point cloud frames, exhibiting relative speeds,
- Figure 12 illustrates an example of first and second field of view, and relative velocity vector of a target object.

DETAILED DESCRIPTION OF THE DISCLOSURE

In the figures, the same references denote identical or similar elements. For sake of clarity, various elements may not be represented at scale.

General context

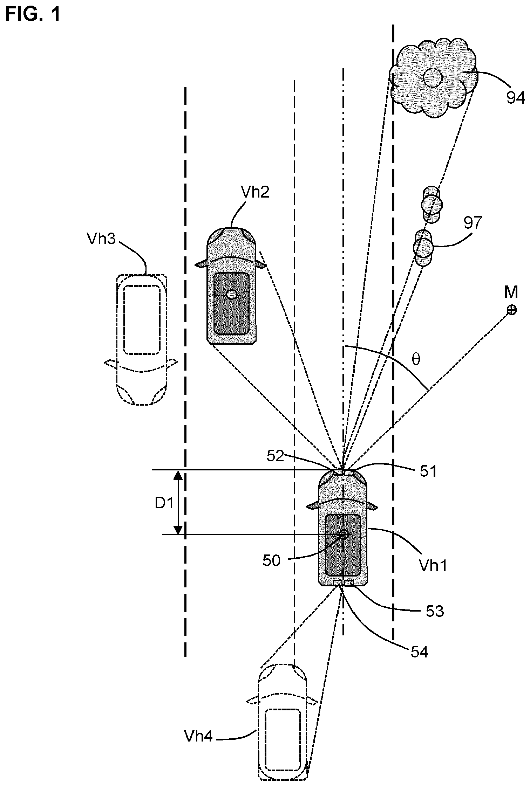

Figure 1 shows diagrammatically a top view of a road where several vehicles are moving. The first vehicle denoted **Vh1** is of particular interest, since it is equipped with at least two environment sensing units. The second vehicle denoted **Vh2** moves in the same direction as per **Vh1**.

A third vehicle denoted **Vh3** moves in the opposite direction as per **Vh1**. A fourth vehicle denoted **Vh4** moves in the same direction as per **Vh1**, behind **Vh1**. Additionally, there may be among other things : road/traffic signs on the side of the road or above the road, trees, bushes, etc...

Besides fixed entities, there may be also possibly moving entities likes animals, people, trash bins, objects blown by the wind, etc..

Besides, it is to be considered any kind of users of the road like bicycles, scooters, motorcycles, trucks, buses, vehicles with trailers, not to mention also pedestrians **97**. Some of them are moving while others can be stationary either at the side of the road or on traffic lane.

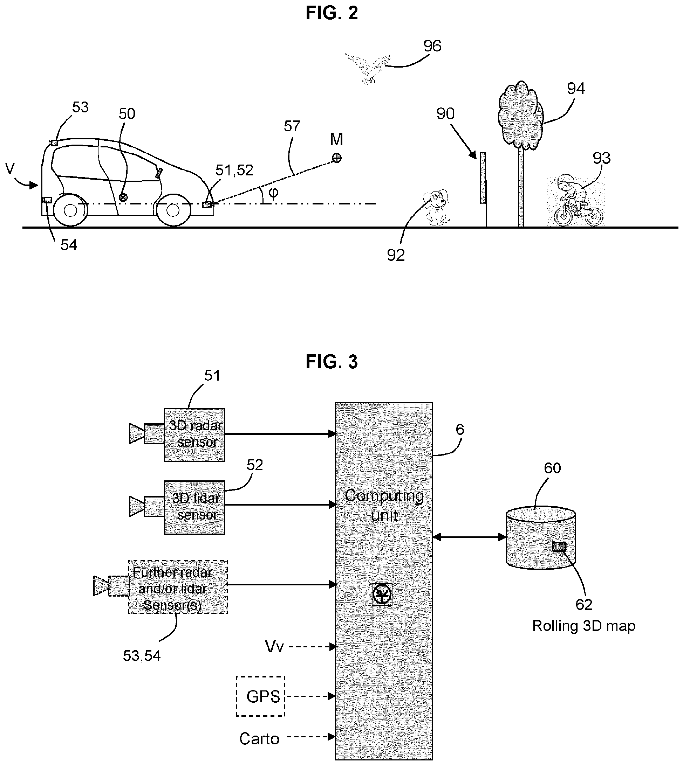

Just to give some illustrative examples with reference to figure 2, we consider the cases of a stray dog **92**, a flying bird **96**, a tree **94**, a cycling kid **93**. There may be provided as well one or more road sign **90**.

The vehicle of interest **Vh1** travels in an environment also named the '*scene*'.

Some objects or entities present in the scene may serve as landmarks for the mapping process to be detailed later on.

Radar-type unit

With reference to figure 3, the system involves a first scanner unit, or first scanner, referenced by **51**. The first scanner unit **51** is here a radar-type scanner, simply 'radar' in short. The radar **51** uses bursts of electromagnetic waves and echoes coming back from objects present in the scene. As known per se, time difference between transmitting burst instant and backscatter echo reception is proportional to the distance separating the radar from the surface of an object were the electromagnetic waves have bounced back. Either a time difference or an equivalent frequency deviation (FMCW Chirp radar variant) is measured to infer the distance.

The electromagnetic waves used for radar unit **51** have a carrier frequency comprised between 10 MHz and 100 GHz. In one embodiment, the radar unit **51** is a 77 GHz radar scanner. In one embodiment, the radar unit is a 24 GHz radar scanner.

The radar unit **51** exhibits a first field of view denoted **FOV1.**

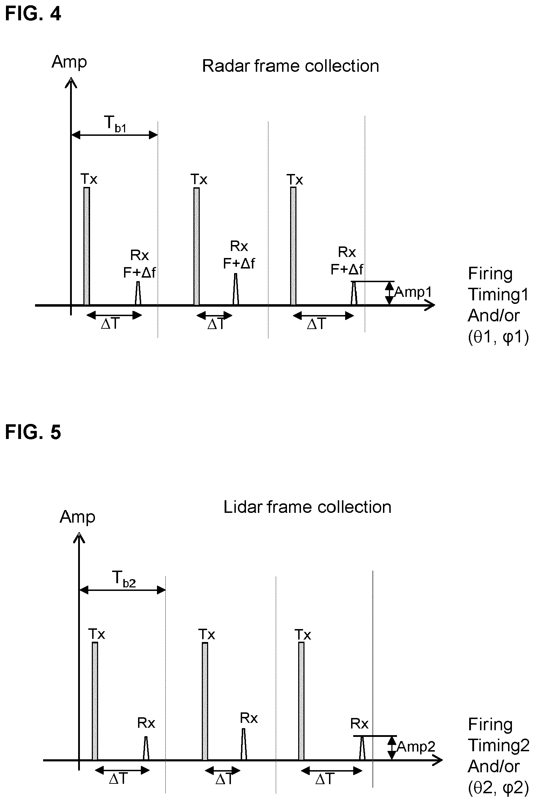

Figure 4 illustrates the frame collection process at the radar unit 51.

Basically, the example shows a conventional Doppler effect radar device. A burst of electromagnetic waves (**Tx**) at a carrier frequency **F** is sent (fired) in a direction of space, via controllable mirrors which orientate the burst according to angles $\theta 1$, $\varphi 1.$ Said electromagnetic waves impinge on objects present in the scene, generating echoes. One part of these echoed electromagnetic waves comes back on the same space direction and is received at the radar device.

Three physical characteristics of this process are of particular interest:

- firstly, the Doppler frequency shift $\Delta\mathbf{f}$, which reflects the radial relative velocity of the echoing object with regard to the scanner,
- secondly, the time difference $\Delta\mathbf{T}$ which reflects the time to flight back and forth between the scanner and the echoing object,
- thirdly, the amplitude **Amp1** of the received echoed signal

The scanning processes performed in real-time, i.e., the controllable mirrors are rotated in the space $(\theta, \varphi)$ simultaneously with the firing of burst of electromagnetic waves (**Tx**) $\theta 1$, $\varphi 1$, to scan the field a view, FOV1 = from $(\theta 1min, \varphi 1min)$ to $(\theta 1max, \varphi 1max)$. $\theta$ can be scanned faster than $\varphi$ horizontal scanning lines, or $\theta$ can be scanned faster than $\varphi$ vertical scanning lines. Firing period is denoted **Tb1.**

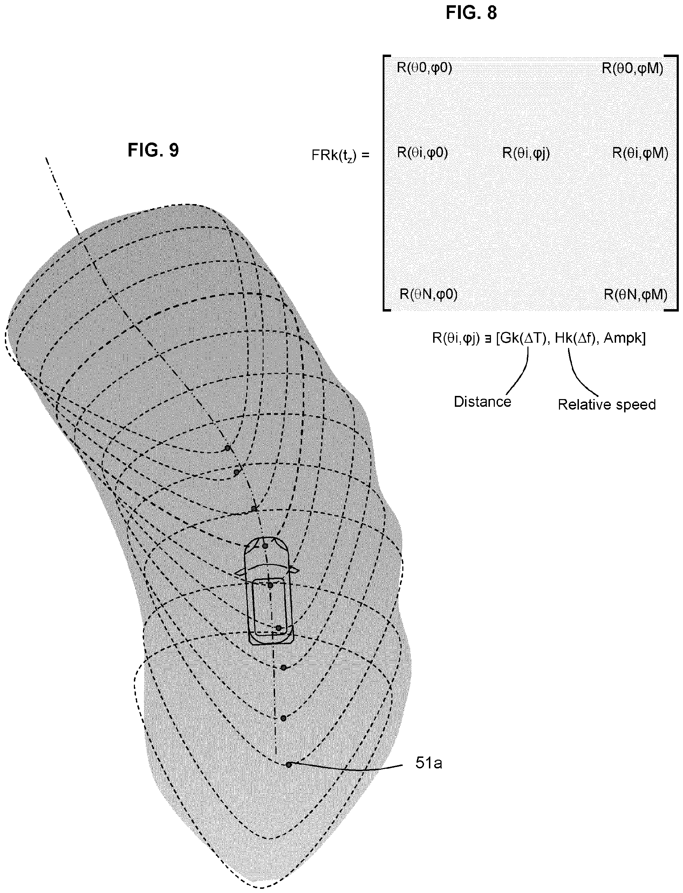

As soon as all the field of view FOV1 has been scanned, the first scanner unit issues a point cloud frame represented at figure 8 by a meta-matrix **FR1**$(t_z)$, $t_z$ being considered as a sampling time.

Each matrix item $R(\theta i,\varphi j)$ comprises : $[Gk(\Delta T)$, $Hk(\Delta f)$, Ampk].

The meta-matrix **FR1**$(t_z)$ is also called a **tensor**.

**Gk**$(\Delta T)$ is representative of the distance separating the echoing target object from the first scanner unit **51**. For example **Dist = $\Delta$T/2c.** where **c** is wave velocity.

**Hk**$(\Delta f)$ is representative of a relative speed. Practically, **Hk**$(\Delta f)$ reflects the "radial" relative speed, namely a projection of the relative speed vector on a radius line **57** extending between the sensing device 51,52 and the target point **M.**

Tangential speed can also be determined if several first frames are compared, or via another method.

In a simplified variant, the radar unit **51** can be a 2D scan radar device instead of a 3D, for example with a horizontal scanning with large vertical aperture.

In summary, the first sensing unit (i.e. radar) acquires (collects) first point cloud frames **11** of the scene with the first filed-of-view, each first point cloud frame comprising an array/matrix **FR1**$(t_z)$ of first points, each point having as attribute a position and relative speed with regard to the first sensing unit.

Besides, we define for the radar unit **51** a reference point **51a.** Said reference point **51a** can be the optics base point, for example the geo center of the rotating mirror systems. Said reference point may also be called 'pose'.

Lidar-type scanner unit

With reference to figure 3, the system involves a second sensing unit, named generically an 'imager', referenced by 52. In the shown example, the imager unit 52 is a lidar-type scanner. The imager unit 52 uses bursts of electromagnetic waves and echoes coming back from objects present in the scene.

Generally speaking, the imager unit **52** may for instance be a laser rangefinder such as a light detection and ranging (LIDAR) which emits an initial physical signal and receives a reflected physical signal along controlled direction of the local coordinate system. The emitted and reflected physical signals can be for instance light beams, electromagnetic waves having a wavelength comprised between 600 nanometer and 2000 nanometer.

The imager unit **52** computes a range, corresponding to a distance from the imager **52** to a point **M** of reflection of the initial signal on a surface of an object located in the scene. Said range is computed by comparing the timings features of respective transmitted signal and reflected signal, for instance by comparing the time or the phases of emission and reception.

The imager unit **52** exhibits a second field of view denoted **FOV2.**

In one example, the imager unit **52** comprises a laser emitting light pulses with a constant time rate, said light pulses being deflected by a two moving mirrors rotating θ**2,** φ**2** along two respective directions.

Figure 5 illustrates the frame collection process at the imager unit 52.

Basically, in a basic time-of-flight Lidar, a burst of electromagnetic waves (**Tx**) at a wavelength λ is sent (fired) in a direction of space, via controllable mirrors which orientate the burst according to angles θ**2,** φ**2.** Said electromagnetic waves impinge on objects present in the scene, generating echoes. One part of these echoed electromagnetic waves comes back on the same space direction and is received at the radar device.

Two physical characteristics of this process are of particular interest:

- firstly, the time difference Δ**T** which reflects the time to flight back and forth between the scanner and the echoing object,
- secondly, the amplitude **Amp2** of the received echoed signal,

The scanning processes performed in real-time, i.e., the controllable mirrors are rotated in the space (θ, φ) simultaneously with the firing of burst of electromagnetic waves (**Tx**) θ2, φ2, two scan the field a view, **FOV2** = from θ2min, cp2min to θ2max, φ2max.

Firing period is denoted **Tb2.**

As soon as all the field of view **FOV2** has been scanned, the first scanner unit issues a point cloud frame represented at figure 8 by a matrix **FR2**($t_z$), $t_z$ being considered as a sampling time.

Each matrix item **R**(θi,φ**j**) comprises [Gk(Δ**T**), Ampk], as represented at figure 8.

Gk(ΔT) is representative of the distance separating the echoing target object from the imager unit **52**. For example **Dist = ΔT/2c.**

Additionally, speed of points in the point cloud frame FR2($t_z$), can be computed from the difference position between two successively collected point cloud frame [FR2($t_{z-1}$) FR2($t_z$)].

Alternatively the imager can be configured to measure indirectly relative speeds associated with a subset of the second frame (12), wherein the subset of points is associated with another second frame captured by the imager at a different time.

In one embodiment, the imager unit **52** is 1500 nanometer Lidar.

In another embodiment, the imager unit **52** is 1550 nanometer Lidar.

In one variant embodiment, the imager unit **52** is a FMCW type Lidar. According to this variant, wavelength ramps are generated in the transmitted electromagnetic waves. Echoes coming back from the surface of objects in the scene exhibit therefore frequency/wavelength different from the currently transmitted frequency/wavelength. However a small doppler shift is added if the target object has an radial relative speed. This difference is converted into a time delay at first order, but also the doppler shift is converted into a radial relative speed. US7986397 gives a practical example of a Doppler Lidar.

In summary, the imager unit **52** acquires (collects) **second point cloud frames 12** of the scene with the second filed-of-view, each second point cloud frame comprising an array/matrix **FR2**($t_z$') of second points, each point having as attribute at least a 3D **position.** Additionally an optionally each second point may as attribute a relative speed with regard to the second scanner unit.

Besides, we define for the lidar unit **52** a reference point **52a.** Said reference point **52a** can be the optics focal base point of the imager unit. Said reference point may be called 'pose'.

First and second fields of view **FOV1**, **FOV2** may be different in size namely, regarding their width and height. It does not preclude the registration process to work for any point cloud frame received at the computing unit **6.**

As an alternative to lidar, one can use stereo vision system to generate second frames. For example with two video cameras situated away from each other, and with triangulation techniques, it is possible to build a 3D image across the second field of view FOV2.

Computing system overview

As shown at figure 3, there is provided a computing unit denoted 6 which is coupled to the radar unit **51** and the imager unit **52.**

In the shown example, the computing unit **6** is distinct from radar and imager **51**,**52**. Alternatively, the computing unit **6** could be arranged next to the first scanner **51** or next to the imager **52**, or even integrated within one of them.

There is provided a data storage space **60** where the computing unit is able to store the rolling 3D map **62** of the scene. The data storage space can be integrated in the computing unit 6 or distinct from the computing unit.

Without being an essential feature, the computing unit can receive the current vehicle speed **Vv** from another on-board unit of the vehicle of interest **Vh1.**

Similarly, without being an essential feature, the computing unit can receive a current geolocation (**GPS**) from another on-board unit of the vehicle of interest **Vh1.**

Similarly, without being an essential feature, there may be available at the computing unit a cartographic map (**Carto**), as known in the navigation systems.

Besides, the computing unit **6** comprises a clock for generating timestamps. The clock of the computing unit may be synchronized with an absolute clock like an UTC clock. In one embodiment, the computing unit **6** receives clock update and/or clock synchronization signal from a remote entity through an Internet enabled communication link.

As stated above, the first sensing unit acquires (collects) first point cloud frames **11** of the scene with the first filed-of-view **FOV1**, each first point cloud frame comprising an array of first points, each point having as attribute a position and relative speed with regard to the first scanner unit. In addition, the radar unit **51** transmits each first point cloud frame **11** to the computing unit **6** as soon as they are available, such that the first point cloud frame **11** can be registered into the rolling 3D map **62.**

As stated above, the second sensing unit acquires (collects) second point cloud frames **12** of the scene with the second filed-of-view, each second point cloud frame comprising an array of second points, each point having as attribute a position (and possibly relative speed) with regard to the imager unit. In addition, the imager unit **52** transmits each second point cloud frame **12** to the computing unit **6** as soon as they are available, such that the second point cloud frame **12** can be registered into the rolling 3D map **62.**

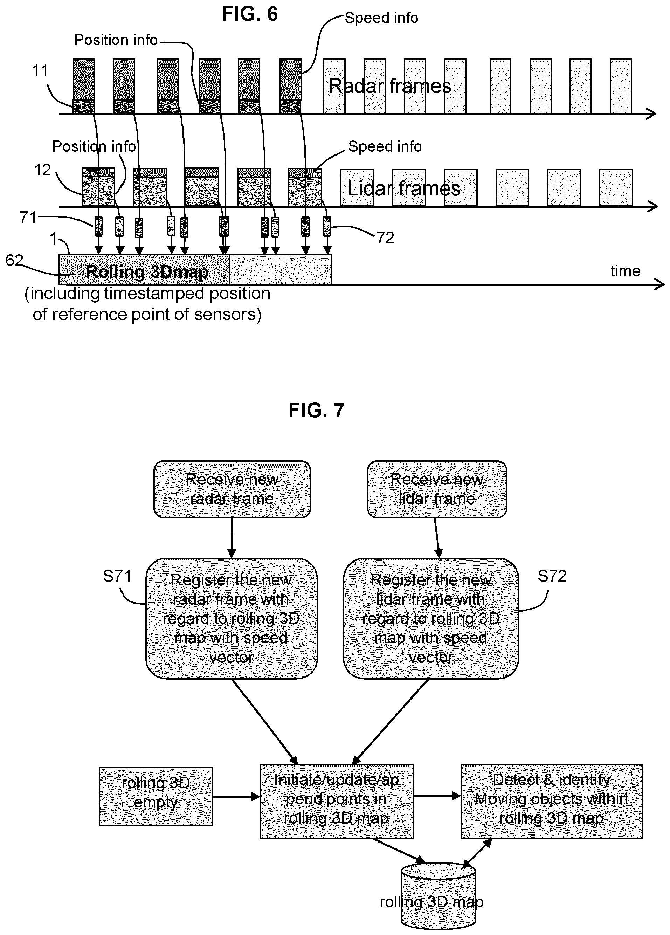

The above process is illustrated at figures 6 and 7. Each time a point cloud frame, **11,12** irrespective of first and second, it is transmitted immediately to a registration process block.

Registration process block is denoted **71, S71** for first point cloud frames **11.** Registration process block is denoted **72, S72** for second point cloud frames **12.**

Registration process is performed asynchronously. The rolling 3D map **62** is built gradually, progressively, incrementally.

Velocity resolution/accuracy is higher than position resolution in first point cloud frames **11**, whereas distance/position resolution is higher than velocity resolution/accuracy in second point cloud frames **12**, as depicted graphically by the size of rectangles at the top two timelines of Fig 6.

The second point cloud frames **12** have generally a better spatial resolution than the first point cloud frames **11.** Advantageously, it may be considered that a 2D grid is created from the second point cloud frames **12**, and the first point cloud frames 11 are registered into said grid as it will be explained below.

In addition, there may be provided a selection of points using a weighting function, such as making points that are further away weigh less than close ones.

### Registration and implementation of rolling 3D map

Registration process involves a geometrical transformation function TR cause a point cloud frame of interest to match into the rolling map of the scene.

The registration process causes the point cloud frame of interest (the latest received) to find the best possible match into the rolling 3D map of the scene, which implies mathematical transformation(s) to shift, orientate, spread-in spread-out the array of points of the point cloud frame of interest.

Find the best possible match into the rolling 3D map can be done by scanning transformation noted TRi, and searching from the best match with an interactive closest points process [TRi] x [FRn(k)] to be compared to portions of [RMAP(tk)] (full rolling 3D map).

Of course, the search may be started from the last registration positions regarding the same sensing source (either the radar or the lidar, or further sensing devices).

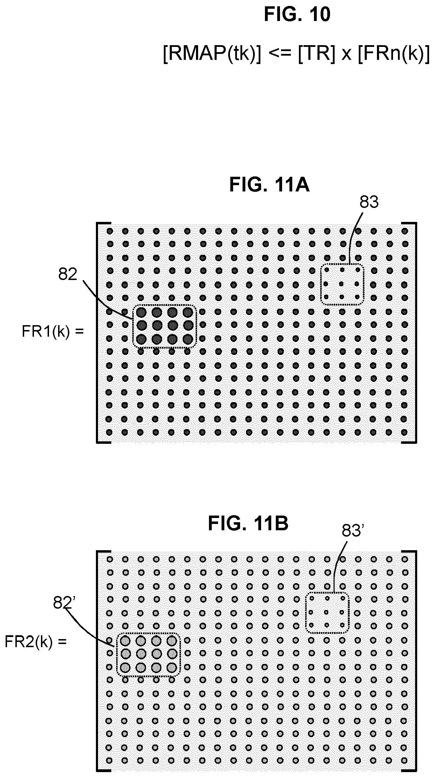

Such geometrical transformation function is illustrated at figure 10.

In the context of the present disclosure, speed data is used to register a newly received frame into the current rolling map of the scene. Namely, the closeness between [RMAP(tk)] [TRi] x [FRn(k)] is evaluated from the velocity of the respective points.

Once the best match TRi=TR$_{best}$ is found, the relevant data [TR$_{best}$] x [FRn(k)] imported into the rolling 3D map 62, which is summarised in figure 10 by the symbolic formula:

$$[RMAP(tk)] \ <= \ [TR] \ x \ [FRn(k)] \ .$$

TR is a tensor-to-tensor transform or a tensor-to-matrix transform.

One example of general registration technique can be found in document EP3078935.

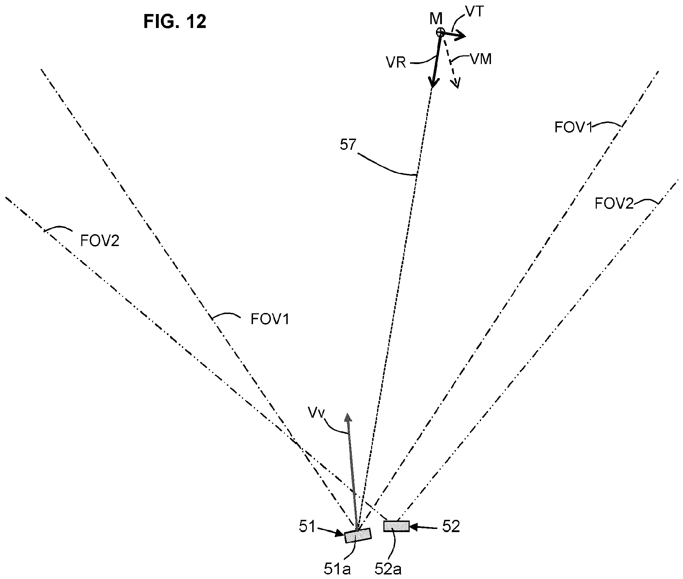

Figure 12 illustrates a speed vector decomposition for target object having a surface providing a backscattering echo. The relative vector of the object denoted **VM** is decomposed radial speed component denoted **VM** along the radius line **57** already mentioned and a tangential speed component denoted **VT.** Here the tangential speed component is illustrated in the horizontal plane however they may be also component in the vertical plane (not shown).

On the other hand, with reference to the radar unit 51, the radar unit is moving with the same speed **Vv** as the vehicle on which it is mounted.

In a typical example where the radar and imager units are placed on a mobile platform (mobile robot, vehicle, drone,...) the current speed of the platform **Vv** is subtracted from the relative speed **VM** acquired in the point cloud frames. Thereby, the rolling 3D map exhibits as attribute an absolute speed, and not a relative, for the points having a speed attribute.

Null absolute speeds denote fixed objects like posts, trees, street furniture.

We also note also from figure 12 that the reference point **51a** of the radar unit **51** can be located at a distance from the reference point **52a** of the the imager unit **52**. This does not preclude the registration process exposed above to operate properly.

Also, as apparent from figures 1 and 2, there may be defined one or more particular point of interest **50** belonging to the vehicle like its centre of gravity or its normal centre of gyration. The geometrical offset **D1** separating the reference point (51a,52a) can be compensated for in the software for controlling the vehicle.

On Figures 11A and 11B, the size of each of the bullet-points represents the relative radial speed of target objects in the scene. In the first point cloud frames **FR1(k)**, the background is stationary, the size of the bullet-points are medium. **82** denotes an object getting closer to the scanner unit, for example **Vh3** on Fig 1, the size of the bullet points is larger. **83** denotes an object moving in the same direction as per the scanner unit, for example **Vh2** on Fig 1, the size of the bullet points is smaller.

Translated into absolute speeds, having defined an axis opposite to the vehicle displacement, **82** exhibits a positive radial speed whereas **83** exhibits a negative radial speed.

Second point cloud frame **FR2(k)** also exhibit similar areas **82'**, **83'**. Such peculiar areas **82'**, **83'** are not necessarily at the same position than corresponding peculiar areas **82**, **83** of first frame FR1(k), given possible difference in field of view, resolution, point-of-view reference point, etc...

The registration process exposed above, thanks to the confirmation, causes coincidence of areas **82** and **82'** with corresponding area in the stored rolling map, and causes coincidence of areas **83** and **83'** with corresponding area in the stored rolling map.

As illustrated at figure 9, tracking of reference points **51a**, **52a** is carried out from registration process. Each time a new frame is register the rolling map the new reference point **51a** (respectively **52a**) is compared to the previously recorded reference point **51a**. A segment extending from the previous position to the new position represents the displacement of the sensor and therefore the displacement of the vehicle. We obtained therefrom a trajectory construction of vehicle within the rolling map.

In some embodiments, this trajectory construction can be confirmed aand/or refined by the GPS tracking points.

Miscellaneous

The promoted method and system work with a GPS-deprived environment (tunnels, multi story parking lots,..), or in places with poor GPS accuracy (mountain roads, ...).

Each frame, namely first and second frames, is timestamped. The timestamping can occur at reception at the computing unit **6**. Likewise, preferably time stamping can be carried out locally at each environment sensing unit namely radar **51** and imager **52**. There may be provided a synchronization of local clocks at radar **51** and imager **52**, with regard to a 'master' clock arranged at the computing unit **6**.

The system may comprise further radar/imager units **53,54**, either radar scanners and/or lidar/3D video devices. The acquisition and registration of frames from further units can also be taken into account with the incremental process for building map as exposed above.

There may be a limit to the depth of the first and second rolling maps, due to memory and processing constraints. Each rolling map can contain several thousands points for example. A way to keep the more interesting points can be a proximity criterion rather than a recentness criterion, i.e. we keep points that are located at a distance below a certain threshold. However, points belonging to an assumed moving object can also be retained in the rolling map even though there are at a distance above the threshold.

Typical frame rate for radar **51** is comprised between 10 Hz and 30 Hz, it can be around 20 Hz. Angular resolution for the radar unit **51** can typically be comprised between 0.5° and 1.5°, although other resolution is not excluded.

Typical frame rate for imager **52** is comprised between 10 Hz and 30 Hz, it can be around 20 Hz. Angular resolution for the imager unit like a Lidar can typically be comprised between 0.05° and 0.5°, although other resolution is not excluded.

**Claims**

1. A system comprising:

   - a radar (51) configured to generate at least a first frame comprising a first point cloud and first relative speeds,
   - an imager (52) configured to generate at least a second frame formed as an image and comprising a second point cloud and second relative speeds,
   - at least a clock configured to generate first and second timestamps associated to the first frame and second frame respectively,
   - a memory configured to store a map (1),
   - a computing unit (6) configured to update the map with a registration of the first point cloud data of the first frame using the first timestamp and the first relative speeds, and further configured to update the map with a registration of the second point cloud data of the second frame using the second timestamp and the relative speeds associated with the second frame.

2. The system according to claim 1, wherein the imager comprises a lidar-type sensor or a stereo-imaging device.

3. The system according to claim 1, wherein the imager comprises a lidar with a laser emitting light in the range of 700nm to 2000nm.

4. The system according to claim 3, wherein the imager is configured to measure directly relative and/or radial speeds associated with the point cloud of the second frame (12).

5. The system according to claim 3, wherein the imager is configured to measure indirectly relative speeds associated with a subset of points of the point cloud of the second frame (12), wherein the subset of points is associated with another second frame captured by the imager at a different time.

6. The system according to any of the claims 1 to 5, wherein the radar (51) and the imager (52) exhibit different frame rates.

7. The system according to any of the claims 1 to 6, wherein the radar (51) and the imager (52) are mounted on a mobile entity and move along a trajectory.

8. The system according to any of the claims 1 to 7, wherein the radar (51) and imager (52) are fixedly mounted and the system is configured to detect an intrusion of an object into a protected space/volume.

9. The system according to any of the claims 1 to 8, wherein the registration includes a calculation of a position of a reference point (51a,52a) of the radar or the imager within the map.

10. The system according to any of the claims 1 to 9, wherein the computing unit (6) is configured to change relative speeds into absolute speeds by subtracting the current speed of the mobile entity on which the scanner units are mounted.

11. A vehicle comprising a system according to any of the claim 1 to 10.

12. A method carried out in a system comprising

   - a radar (51) configured to generate at least a first frame comprising a first point cloud and first relative speeds,
   - an imager (52) configured to generate at least a second frame formed as an image and comprising a second point cloud and second relative speeds,
   - a computing unit (6), and a memory configured to store a map (1),

the method comprising :

   - acquire/collect, at the radar, first point cloud frames (11) of a scene, each first point cloud frame comprising an array of first points, each point having as attribute a position and relative speed with regard to the radar,
   - at the radar unit, transmit each first point cloud frame to the computing unit as soon as they are available,
   - acquire/collect, at the imager (52), second point cloud frames (12) of the scene, each second point cloud frame comprising an array of second points, each point having as attribute at least a 3D position and possibly a relative speed with regard to the second scanner unit,
   - at the imager, transmit each second point cloud frame to the computing unit as soon as they are available,
   - at the computing unit, from each of first and second point cloud frames (11,12), perform a registration step where a geometrical transformation function (TR) cause a point cloud frame of interest to match into the rolling map of the scene, wherein speed data is used to register a newly received frame into the current rolling map of the scene,
   - at the computing unit, update already existing points and/or create new points in the rolling map of the scene (1), where said rolling map of the scene includes not only a position but also a speed of at least a plurality of points,
   - update continuously and incrementally, at the a computing unit, the rolling map of the scene (1) from the successive registration of data from the first and second point cloud frames (11,12).

13. The method according to claim 12, wherein the reception and registration of data from the first and second point cloud frames (11,12) are performed asynchronously, with frame rate and frame resolution being different for first and second point cloud frames.

14. The method according to any of the claims 12 to 13, wherein the computing unit (6) is configured to change relative speeds into absolute speeds by subtracting the current speed of the mobile entity on which the scanner units are mounted.

15. The method according to any of the claims 12 to 14, wherein the first and second scanner units (51,52) exhibit different frame rates, and the system is deprived of common clock, i.e. at least first and second scanner units (51,52) have no common clock.

**FIG. 1**

## FIG. 2

## FIG. 3

Rolling 3D map

FIG. 4

FIG. 5

## FIG. 6

Position info

Speed info

11

Position info

Radar frames

12

Speed info

Lidar frames

71

72

1

62

Rolling 3Dmap

time

(including timestamped position
of reference point of sensors)

## FIG. 7

Receive new
radar frame

Receive new
lidar frame

S71

Register the new
radar frame with
regard to rolling 3D
map with speed
vector

Register the new
lidar frame with
regard to rolling 3D
map with speed
vector

S72

rolling 3D
empty

Initiate/update/ap
pend points in
rolling 3D map

Detect & identify
Moving objects within
rolling 3D map

rolling 3D map

## FIG. 8

## FIG. 9

$$FRk(t_z) = \begin{bmatrix} R(\theta 0, \varphi 0) & & R(\theta 0, \varphi M) \\ \\ R(\theta i, \varphi 0) & R(\theta i, \varphi j) & R(\theta i, \varphi M) \\ \\ \\ R(\theta N, \varphi 0) & & R(\theta N, \varphi M) \end{bmatrix}$$

$$R(\theta i, \varphi j) \ni [Gk(\Delta T), Hk(\Delta f), Ampk]$$

Distance    Relative speed

51a

# FIG. 10

$$[RMAP(tk)] <= [TR] \times [FRn(k)]$$

## FIG. 11A

FR1(k) =

## FIG. 11B

FR2(k) =

**FIG. 12**

Europäisches Patentamt

European Patent Office

Office européen des brevets

# EUROPEAN SEARCH REPORT

Application Number

EP 19 30 6454

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 525 000 A1 (BAYERISCHE MOTOREN WERKE AG [DE]) 14 August 2019 (2019-08-14) * paragraphs [0002], [0004], [0005], [0013] - [0015], [0021], [0027], [0059], [0089] - [0091]; claim 12; figures 15,16 * | 1-15 | INV. G01S13/86 G01S13/931 G01S17/89 G01S17/931 |
| X | US 2018/232947 A1 (NEHMADI YOUVAL [IL] ET AL) 16 August 2018 (2018-08-16) * paragraphs [0051], [0061] - [0067], [0090], [0091]; figure 3 * | 1-15 | ADD. G01S13/89 |
| X | US 9 097 800 B1 (ZHU JIAJUN [US]) 4 August 2015 (2015-08-04) * column 13, lines 39-59 * * column 14, lines 50-63 * * column 21, line 25 - column 22, line 61; figure 8 * | 1-15 | |
| X | US 2018/267544 A1 (LEE KUAN-HUI [US] ET AL) 20 September 2018 (2018-09-20) * paragraphs [0030] - [0032], [0037], [0039], [0047] - [0052], [0077] * | 1-15 | |

TECHNICAL FIELDS
SEARCHED      (IPC)

G01S

The present search report has been drawn up for all claims

| Place of search | Date of completion of the search | Examiner |
|---|---|---|
| Munich | 18 May 2020 | Schmelz, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 819 667 A1**

## ANNEX TO THE EUROPEAN SEARCH REPORT
## ON EUROPEAN PATENT APPLICATION NO.

EP 19 30 6454

This annex lists the patent family members relating to the patent documents cited in the above-mentioned European search report.
The members are as contained in the European Patent Office EDP file on
The European Patent Office is in no way liable for these particulars which are merely given for the purpose of information.

18-05-2020

| Patent document cited in search report | | Publication date | Patent family member(s) | | Publication date |
|---|---|---|---|---|---|
| EP 3525000 | A1 | 14-08-2019 | EP 3525000 A1<br>WO 2019154536 A1 | | 14-08-2019<br>15-08-2019 |
| US 2018232947 | A1 | 16-08-2018 | NONE | | |
| US 9097800 | B1 | 04-08-2015 | NONE | | |
| US 2018267544 | A1 | 20-09-2018 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7986397 B

- EP 3078935 A